Europäisches Patentamt

European Patent Office

Office européen des brevets

(19)

(11) Publication number: **0 312 404**
A2

# (12) EUROPEAN PATENT APPLICATION

(21) Application number: **88309686.9**

(22) Date of filing: **14.10.88**

(51) Int. Cl.⁴: **G 11 B 5/03**
G 11 B 5/035, G 11 B 5/027
// G11B20/02

(30) Priority: **15.10.87 US 109190**

(43) Date of publication of application:
**19.04.89 Bulletin 89/16**

(84) Designated Contracting States:
**AT BE CH DE ES FR GB GR IT LI LU NL SE**

(71) Applicant: **PERSONICS CORPORATION**
**120 Scott Drive**
**Menlo Park California 94025 (US)**

(72) Inventor: **Baxter, John E.**
**128 24th Avenue**
**San Mateo California 94403 (US)**

**Poimboeuf, Michael K.**
**127 Atherwood Avenue**
**Redwood City California 94061 (US)**

(74) Representative: **Needle, Jacqueline et al**
**W.H. BECK, GREENER & CO 7 Stone Buildings Lincoln's Inn**
**London WC2A 3SZ (GB)**

(54) Apparatus and method for improving the fidelity of audio recording on a magnetic medium.

(57) Apparatus and method for improving the fidelity of audio recording on a magnetic medium in which an input signal, suitably equalized, and a variable amplitude RF bias signal are applied to a record head in a magnectic media recording system. The RF bias amplitude is controlled so as to be inversely proportional to a function of the sampled pre-emphasized input signal. The control signal is derived from within the record amplifier circuit.

EP 0 312 404 A2

## Description

## APPARATUS AND METHOD FOR IMPROVING THE FIDELITY OF AUDIO RECORDING ON A MAGNETIC MEDIUM

This invention relates to an apparatus for improving the quality of tape recordings by automatically varying the amount of applied bias at the recording head in order to compensate for variations in the high and low frequency components of an applied audio signal to be recorded. The present invention increases the linearity of recording media in the presence of high level, high frequency signals, in order to improve the fidelity of the resulting recordings.

Early wire and tape recordings were made without the benefit of RF bias. Thus, only the magnetic signals as produced by the audio signal to be recorded were transferred to the magnetic medium. It was discovered that the addition of a supersonic bias signal to the audio signal caused the level of the recorded signal to increase and the distortion present on the recording to decrease. Thus, both the sensitivity of the magnetic medium and its ability to carry a faithful representation of the applied audio signal can be significantly enhanced by the addition of so-called RF bias.

It was soon discovered that the optimum bias signal amplitude was different at each recorded wavelength. Shorter wavelengths require a lower optimum bias applied to the recording head than do recordings of signals having wavelengths corresponding to lower frequencies. Because of this, all prior fixed bias recording apparatus set the bias amplitude to some value that provides an acceptable compromise between the low and high frequency performance of the magnetic media. If the bias amplitude is set to a low value so as to enhance the high frequency, short wavelength, performance of the media, the mid and low frequency performance suffers, resulting in excessive distortion and a lowering of the maximum recorded level at those frequencies.

Therefore, it would seem that a solution to the problem of compromise bias would be to dynamically vary the bias amplitude in response to the spectral content of the applied audio signal. Several patents have been issued for particular techniques to vary the applied bias in response to the spectral content of the audio signal.

The earliest available variable bias scheme was proposed by Haynes, U.S. Patent No. 2,628,287, issued February 10, 1953. The Haynes patent was implemented using vacuum tubes. Haynes provided a two path, open loop system where the control signal was taken from the input of the record amplifier, pre-emphasis applied, and the signal was then rectified to negatively modulate the amplitude of the RF bias. There was no relationship between the pre-emphasis used in the bias control circuit and that used in the record amplifier itself. This prevented practical implementation of the variable bias scheme. Furthermore, the lack of a relationship between the pre-emphasis used in the bias control circuit and that used in the record amplifier resulted in inadequate tracking of variations in performance of the record amplifier.

Other variable bias methods have included those that rely upon incidental control signals arising from other signal processing activities, or those which take a function of the entire signal present across a recording head and use this as a control signal.

An example of the latter type of bias control is found in Jensen, U.S. Patent No. 4,454,548, issued June 12, 1984. In this patent, the inventor provides a closed loop control over the RF bias amplitude by using a representation of the total signal at the face of the recording head as the negative feedback to the bias control amplifier.

This later method while having significant merit, does not give the user all of the potential benefits to the present variable bias system.

Previous solutions to this problem assume that a magnetic medium exhibits an immediate audible overload in the presence of very short duration signals. This assumption has been shown to be flawed and the present invention takes advantage of this new information by allowing short duration signals to be applied to the tape without bias reduction taking place. An additional concern is to avoid mistracking of complementary noise reduction systems due to tape saturation. It has been found that signals having a shorter duration than the response time to common complementary noise reduction systems are unlikely to result in audible mistracking.

The prior art also specifically intended to maintain a constant applied flux to the record head. The present invention shows that it is advantageous to allow the bias signal to be controlled in an open loop manner so that the bias may be reduced more quickly as the applied high frequency signal level increases. In this way, slight differences in the performance of the magnetic media may be adjusted to the precise requirements of the recording system.

### Summary of the Invention

In order to overcome the above disadvantages of known methods of varying bias to affect the sensitivity of a recording medium, the present invention provides an apparatus for producing a variable control signal such that the amplitude of the bias signal applied to the recording head is inversely proportional to the high frequency components present in the audio signal. This is accomplished by sampling an input audio signal in an open loop circuit which produces a control voltage inversely proportional to the amount of high frequency present in the audio signal. The control voltage produced by the open loop then drives a closed loop feedback circuit which automatically varies the bias at the recording head. The audio signal is excluded from the closed loop feedback circuit and is summed with the bias signal output from the closed circuit at an external summing node.

The present invention provides an apparatus which recognizes and takes advantage of the following facts. These are as follows.

1. A magnetic tape may sustain short duration, high level, signals without audible non-linearity occurring.

2. The amount of bias reduction for optimum performance of the recording medium may not necessarily require a constant biasing effect at the face of the recording head. In fact, it has been found in the present invention to be advantageous to increase the rate of bias reduction with the increase of absolute high frequency signal level in the applied audio signal.

3. From data collected using a number of different tape materials, it has been found that a stabilized bias, open loop, servo bias scheme can effect significant and stable improvement to the performance of a magnetic recording system. This allows the user considerable latitude in choice of initial and terminal bias operating points.

4. The biasing effect upon the magnetic material is a combination of signal and RF bias. The total biasing effect is greatly affected by the amount of high frequency pre-emphasis supplied by the record amplifier.

5. The present invention differs from earlier solutions to the problem of improving the quality of a recording by applying a bias to a recording head by recognizing that the dynamics of the audio signal must be taken into account. Also, the preferred embodiment of the present invention allows short duration, high level audio signals to be ignored while at the same time, longer duration signals are allowed to influence amount of applied RF bias amplitude at the recording head. The present invention further recognizes that the optimum rate of reduction in bias is not necessarily in direct and linear relationship to the increase in applied audio signal amplitude. The present invention automatically takes into account changes that may occur in the characteristics of the record head with wear and adjusts the gain of the bias amplifier to maintain a constant applied voltage.

## Description of the Drawings

FIG. 1 is a block diagram showing the major components of the bias control apparatus in accordance with this invention.

FIG. 2 is a detailed circuit diagram of the bias control apparatus of the present invention.

## Detailed Description of the Preferred Embodiment

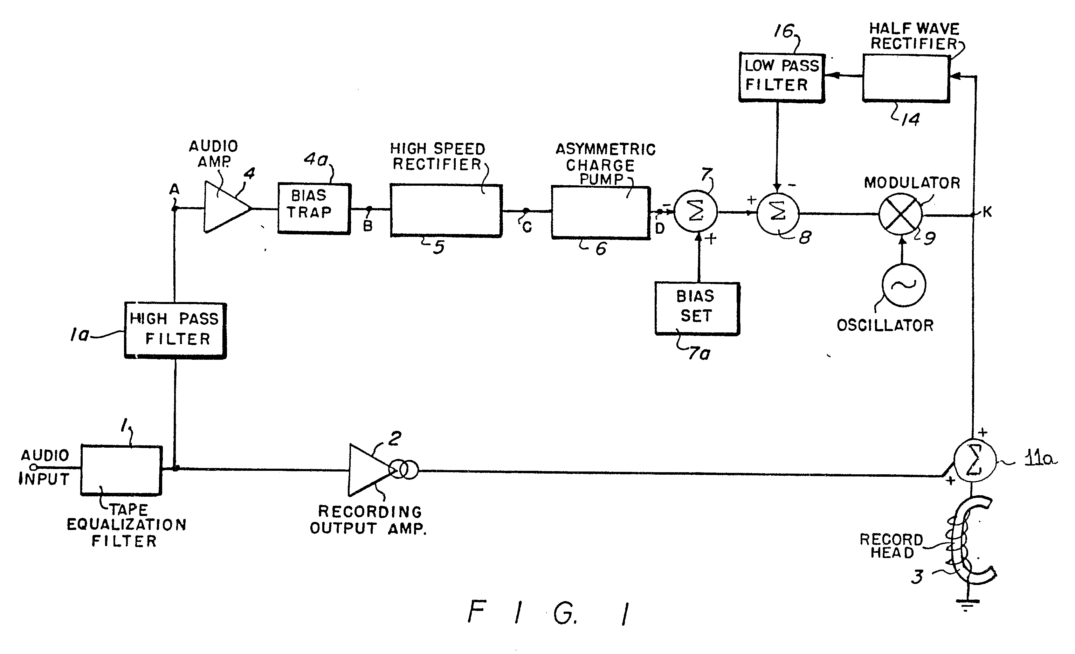

Referring to FIG. 1, the audio signal is first applied to means for emphasizing desired components of the audio signal by placing frequency conscious components in an amplifier design in order to impress a desired frequency response or a transfer function on that amplifier's performance. In the preferred embodiment this is accomplished by a tape equalization filter 1 having a transfer function that permits the recording of tape or records in conformance with the appropriate equalization standards for the type of tape and the speed being used. The amount of pre-emphasis applied varies with respect to the speed of recording and the intended playback characteristics. The tape equalization filter 1 emphasizes the high frequency components of the audio signal.

After leaving the tape equalization filter 1, the signal branches into two paths. The first path is to the record output amplifier 2 which serves to match the audio signal to the record head 3. The first path is conventional. The second path forms an open loop for producing the control signal. When the audio signal is to be pre-emphasized as in the preferred embodiment, then it is important that the second path be connected to the output lead of the tape equalization filter 1 in order to receive the pre-emphasized audio signal. In the preferred embodiment, the second circuit path is via high pass filter 1a and a buffer audio amplifier 4. The signal continues through bias trap 4a to remove residual bias components. The signal then goes to a very high speed, precision full wave rectifier 5 that changes the pre-emphasized audio signal into a fluctuating DC potential, the level of which is proportional to the peak positive and negative amplitudes of the applied audio signal.

The rectified voltage at node C then goes into an asymmetric charge pump 6. The charge pump 6 provides a means for enabling short duration, high level audio signals to be ignored. As noted previously, short duration high level audio signals may be sustained by a magnetic medium without audible distortion.

The signal from the charge pump 6 is applied to the inverting input lead of summing amplifier 7. The quiescent value of bias is set by placing a DC potential on the non inverting input lead of the summing amplifier 7 by means of a bias set 7a. The DC potential of bias set 7a can be adjusted to provide a desired bias amplitude. Summing amplifier 7 superimposes or adds a DC voltage from the bias set 7a to the filtered audio signal. The voltage produced at the output lead of summing amplifier 7 is the control voltage driving the closed loop for stabilizing the bias amplitude. This control voltage is inversely proportional to the high frequency components in the audio signal. For example, when low frequency components dominate the audio signal applied to the recording amplifier 2, the voltage on the inverting input lead of summing amplifier 7 decreases. Therefore, the output voltage from the summing amplifier 7 will increase. Means are provided for producing a voltage that is the sum of a DC voltage representing a desired bias reference amplitude and the voltage from the summing amplifier 7. In the preferred embodiment this is achieved by summing amplifier 8.

The invention uses a means for sampling the applied audio signal to continuously adjust the bias amplitude accordingly so that the saturation output level of the recording tape may be extended. This is accomplished by means of a closed feedback loop. The closed loop is driven by the control voltage produced by the open loop to adjust the modulating input of class C modulator 9 so that applied bias amplitude is inversely proportional to the amount of high frequency present in the audio signal. In the present invention, the audio signal is excluded from the closed loop feedback scheme. Means are provided for producing an output signal at the recording head 3 which represents the sum of the audio signal from the recording output amplifier 2 and the output signal from the modulator 9. In the preferred embodiment, this is achieved by a summing node 11a.

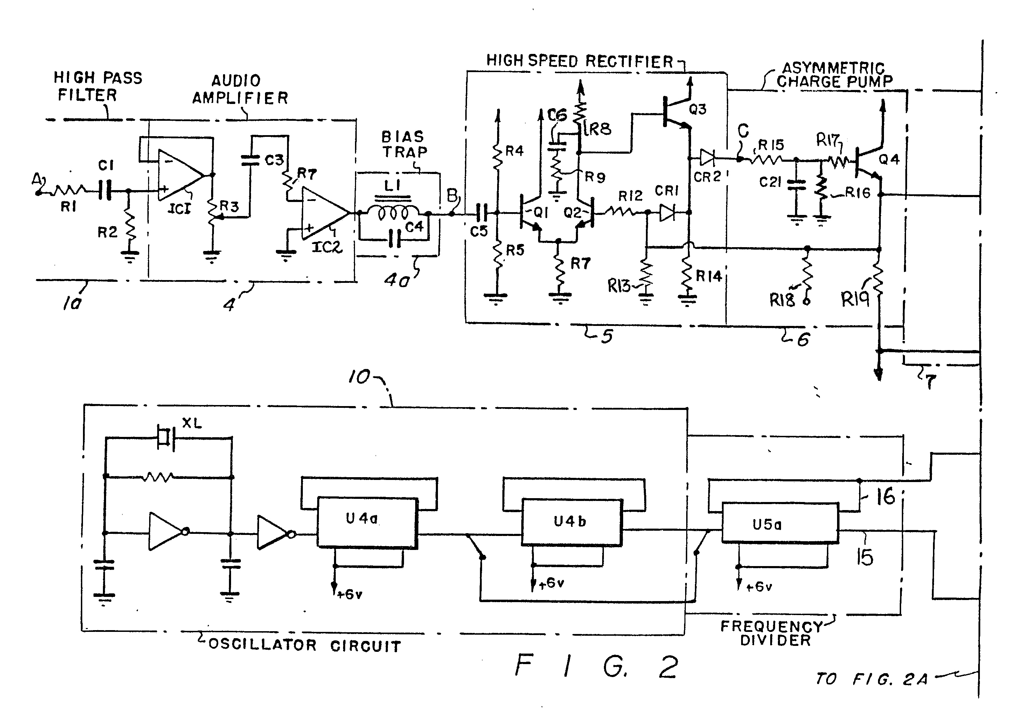

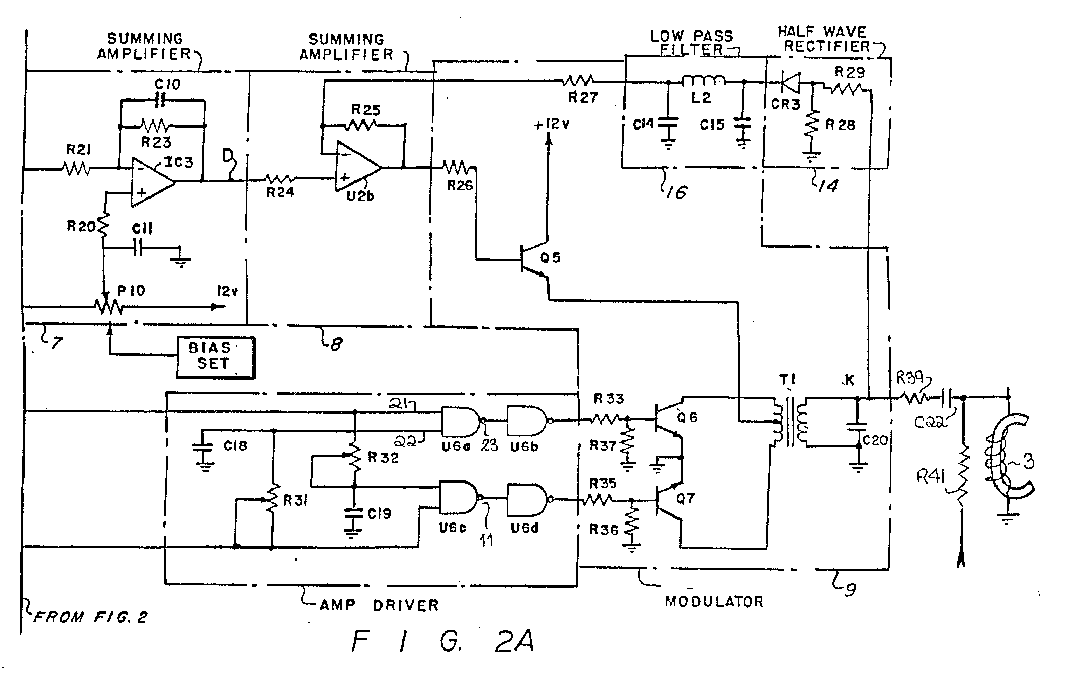

The sampling and feedback process is described more particularly with reference to FIG. 2.

After leaving the tape equalization filter 1, the pre-emphasized audio signal is applied to a filtering means comprising a high pass filter 1a shown at node A in FIG. 2. The high pass filter 1a consists of resistor R1, capacitor C1 and resistor R2, respectively. The high pass filter 1a reduces the low frequency content of the audio input signal, thus producing an audio signal with reduced low frequency. The output of the high pass filter 1a is applied to an audio amplifier 4, comprised of follower stage IC1, gain adjustable potentiometer R3 and gain stage IC2. The negative feedback loop from the output lead of follower stage IC1 to its inverting input lead makes follower stage IC1 a unity gain amplifier in which the input voltage amplitude equals the output voltage amplitude. Follower stage IC1 has high input impedance on its non inverting input lead so as not to interfere with the output characteristics of the high pass filter 1a.

The output of the follower stage IC1 is applied to variable resistor R3 and a coupling network comprised of capacitor C3 and resistor R7. The filtered signal is then applied to the inverting input lead of amplifier gain stage IC2. The output signal from gain stage IC2 is then fed into a bias trap 4a (a "notch" filter) comprised of capacitor C4 in parallel with inductor L1. Capacitor C4 and inductor L1 filter out residual bias which may have gotten into the pre-emphasized audio signal. The output signal at node B is an amplified version of the output signal from the high pass filter 1.

The amplified audio signal then is applied to a rectifying means which in the preferred embodiment is high speed rectifier 5 consisting of NPN transistor Q1, NPN transistor Q2 and associated resistors and capacitors. NPN transistors Q1 and Q2 are configured as a cascade amplifier. The cascade amplifier comprised of transistors Q1 and Q2 produces two versions of the audio signal which are 180° out of phase. Transistor Q1 is an emitter follower and transistor Q2 acts as a common base amplifier. The two versions of the audio signal which are 180° out of phase appear at the base of transistor Q3 and across resistor R13, respectively. The voltage across resistor R13 then goes through diode rectifier CR1. A pulsating DC signal is developed at the cathode of diode rectifier CR1. This signal represents the positive peaks of the signal developed across resistor R13.

The signal on the base of emitter follower Q3 is 180° out of phase with respect to the signal at resistor R13. Emitter follower Q3 adds the signal at its base to the pulsating DC signal produced by diode rectifier CR1. (Emitter follower Q3 adds an AC signal to a pulsating DC signal.) The sum of the two signals at the emitter of Q3 is then rectified by diode rectifier CR2 to produce a pulsating DC signal.

Thus, the output of diode rectifier CR2 accomplishes full wave rectification of the original audio signal. The signal waveform at node C is thus a full wave, rectified version of the applied audio signal.

The full wave rectified signal is then applied to an asymmetric charge pump 6 comprised of resistor R15, capacitor C21 and resistor R16. The charge pump 6 provides a means for de-emphasizing or ignoring signals having a short time duration. Charge pump 6 passes only the low frequency components of the rectified signal. The charge/discharge characteristics of charge pump 6 are asymmetric in that the charge characteristics determined by R15 charging through CR2 are different from the discharge characteristic determined by the discharge through R16. The output of the charge pump 6 is then applied through resistor R17 to the base of transistor Q4, an emitter follower. Asymmetrical charge versus discharge characteristics of charge pump 6 take advantage of asymmetric attack versus decay of control signals of common complementary noise reduction systems.

Resistor R17 functions to increase the input impedance of transistor Q4 and adjusts the base bias level for transistor Q4. The output of transistor Q4 is applied to the inverting input lead of amplifier IC3. Amplifier IC3 has a capacitor C10 and a resistor R23 coupled from the output lead of amplifier IC3 to the inverting input lead of amplifier IC3 in order to reduce the gain of amplifier IC3 for high frequencies. Amplifier IC3 thus functions somewhat like a low pass filter. The gain of amplifier IC3 is increased for lower frequencies and reduced for higher frequencies. Thus, the lower frequencies are emphasized (the signals are increased in amplitude) and the higher frequencies are de-emphasized or reduced in amplitude.

The bias set voltage determines an initial reference level of a bias signal. The bias set voltage is a variable DC voltage applied to the non inverting input lead of amplifier IC3. The bias set voltage is determined by a potentiometer P10, a filtering capacitor C11 and resistor R20. The capacitor C11 acts to filter out any AC components of the bias set voltage. The bias set voltage determines the bias amplitude level when no audio signal is present. The rectified and filtered audio signal is applied to the inverting input of amplifier IC3 as set forth above. The output of amplifier of IC3 thus will be a full wave rectified audio signal superimposed upon or added to a DC voltage from the bias set. This signal is applied to the non inverting input of operational amplifier U2b which is configured as a summing amplifier.

The summing amplifier U2b forms a key node in the closed feedback loop for stabilizing the applied bias amplitude at the recording head. The summing procedure and bias control is as follows. A bias signal is developed by an appropriate means for generating a supersonic sine wave. In the preferred embodiment a conventional oscillator denoted generally at 10 is used to generate the bias signal. A crystal oscillator X1 develops an AC square wave of approximately 3.22 MHz. This AC signal then goes through a series of frequency dividers shown generally in FIG. 2 at U4a, U4b and U5a, respectively. The frequency divider U5a produces two square waves on its two output leads 15 and 16, respectively which are 180° out of phase.

A first square wave on lead 16 of frequency divider U5a is applied to lead 21 of NAND gate U6a. The other square wave (180° out of phase) on lead 15 of frequency divider U5a is applied to a variable resistor R31 and capacitor C18 connected in series and to lead 22 of NAND gate U6a which is connected to the junction of resistor R31 and capacitor C18.

Capacitor C18 charges to a positive peak through resistor R31 when a square wave on output lead 15 of frequency divider U5a is positive. When the square wave at output lead 15 goes negative, capacitor C18 discharges through resistor R31. At this time, the voltage on output lead 16 of frequency divider U5a is positive. Thus, both input leads 21 and 22 of NAND gate U6a are high when output lead 16 from the frequency divider goes high and output lead 15 from the frequency divider U5a goes low.

When both input leads 21 and 22 respectively of NAND gate U6a are high, this produces a negative going pulse on the output lead 23 of NAND gate U6a which lasts until capacitor C18 discharges fully. A similar process occurs with respect to frequency divider U5a, resistor R32 and capacitor C19 to produce negative going pulses on the output lead 11 of NAND gate U6c. The width of these pulses is determined by the rate of discharge of capacitors C18 and C19. The pulses produced at the output lead 11 of NAND gate U6c are separated in time from the pulses produced on the output lead 23 of NAND gate U6a by one half the period of the frequency of the square wave output signal produced by frequency divider U5a. The foregoing signals from NAND gates U6a and U6c are applied to the input leads of inverters U6b and U6d, respectively. The output signals from the inverters U6b and U6d are applied alternatively to the bases of NPN transistors Q6 and Q7, respectively. Thus, the output signals from the inverters alternatively turn on NPN transistors Q6 and Q7.

The means for producing an amplified sine wave comprising the bias signal will now be described. Bipolar transistors Q5, Q6, Q7, transformer T1, and capacitor C20 comprise a modulated class C amplifier 9 which functions as the bias output stage.

Transistors Q6 and Q7 have their emitters connected to ground. The bases of transistors Q6 and Q7 are connected to receive input signals from inverters U6b and U6d respectively, as described above. Opposite ends of the primary winding of transformer T1 are connected to the collectors of transistors Q6 and Q7. A DC voltage is applied to the collectors of transistors Q6 and Q7 through the center tap of transformer T1 which is in turn connected to the emitter of transistor Q5. The base of transistor Q5 receives the output voltage from the summing amplifier U2b. Potentiometers R31 and R32 are adjusted to maintain symmetry of the waveform through the primary winding of transformer T1.

The secondary winding of transformer T1 along with capacitor C20 forms a resonant circuit to produce a sine wave at node K. Node K is the output of the modulated class C amplifier 9. The sine wave is the RF bias signal. The closed feedback loop for automatically controlling the applied RF bias amplitude of this signal will now be described.

The sine wave (bias signal) is applied to a half wave rectifier 14 comprised of resistor R29, resistor R28, and diode rectifier CR3. The half wave rectifier 14 produces a pulsating DC signal or a sine wave at the cathode of diode CR3 with the negative going pulses removed. The output signal of the half wave rectifier 14 is applied to a low pass filter 16 comprised of inductor L2 and capacitors C14 and C15, respectively. The capacitors C14 and C15 are charged with each positive going pulse of the signal and are discharged slowly through the inverting input of summing amplifier U2b. As set forth previously, a DC voltage inversely proportional to the amount of high frequency in the audio signal and directly proportional to the bias set potentiometer setting is applied to the non inverting input of summing amplifier U2b. Accordingly, the output of summing amplifier U2b is a voltage proportional to the difference of the two voltages applied to its input leads.

Whenever there is a change in voltage on the non inverting input lead of summing amplifier U2b, (due to the change in the open loop control output signal) the voltage on the inverting input lead of amplifier U2b will follow or track the voltage on the positive lead. Therefore, the waveform of the output voltage from summing amplifier U2b will be similar to the waveform of the signal on its non inverting input lead.

The amplified voltage from the output lead of summing amplifier U2b is then applied to the base of transistor Q5. As the voltage on the output lead of summing amplifier U2b increases, the current through transistor Q5 increases. Note that the emitter of transistor Q5 is connected to the center tap, or modulating input of transformer T1 of the modulated class C amplifier 9. Thus, as the output voltage from the summing amplifier increases, the current through the emitter of transistor Q5 increases and transformer T1 responds to increase the amplitude of the sine wave produced by the modulated class C amplifier 9 which is applied to the recording head 3. The sine wave or increased RF bias amplitude then returns through the closed feedback loop to the inverting input lead of summing amplifier U2b where it is again summed with the voltage appearing on the non inverting input lead of summing amplifier U2b. Amplifier U2b is the control element of the closed loop feedback scheme and provides the access point of the open loop.

Means are provided for applying a signal to the recording head 3 which represents the sum of the audio signal from the open loop and the bias signal from the closed loop at the output stage of the modulator 9. In the preferred embodiment this is accomplished by a summing node 11a comprising resistor R39, capacitor C22 and resistor R41, respectively. Thus, the signal representing the sum of the audio signal and the bias signal from the output stage of the modulator 9 is then applied to the recording head 3. It is important to note that the signal representing the sum of the audio and the bias signal could be applied to any suitable means for transferring magnetic media onto a recording medium in order to achieve the same improved quality of the recording. In the preferred embodiment, the means for transferring magnetic media onto a recording medium comprises a conventional recording head.

The bias amplitude is reduced as high frequency components of the audio signal are increased due to the function of the inverting amplifier IC3. When the high frequency components of the audio signal are increased, the object of the invention is to automatically reduce bias amplitude in the following manner. As high frequency components increase, the voltage on the negative input lead of inverting amplifier IC3 increases, but the difference between the voltage on the negative input lead of amplifier IC2A and the bias set voltage on the non inverting input lead decreases. Thus, the output of the inverting amplifier IC3 decreases at node D. This output voltage is applied to the non inverting input of summing amplifier U2b. This reduces the output voltage from amplifier U2b and reduces the amplitude of the applied bias signal at the recording head.

Thus, it can be seen that the amplitude of the bias signal in the preferred embodiment is continuously controlled by means of a closed feedback loop wherein the feedback voltage is proportional to the amplitude of the bias signal and the closed loop feedback voltage continually tracks changes in the applied audio signal.

While the invention has been described in connection with what is presently considered to be the most practical and preferred embodiment, it is to be understood that the invention is not limited to the disclosed embodiment but, on the contrary, is intended to cover various modifications and equivalent arrangements included within the spirit and scope of the appended claims. Therefore, persons of ordinary skill in this field are to understand that all such equivalent structures are to be included within the scope of the following claims.

## Claims

1. Apparatus for improved recording of an audio signal on a magnetic medium comprising:
means for transferring information onto a magnetic recording medium;

means for generating a bias signal having an initial reference level;

means for producing a variable control signal for said generating means such that the amplitude of the bias signal is continuously varied in inverse proportion to the amount of high frequency components present in said audio signal; and

means for providing an output signal at said means for transferring information onto a magnetic recording medium representative of the sum of said audio signal and said continuously varied bias signal.

2. Apparatus as claimed in Claim 1, further comprising means for emphasizing the high frequency components of an audio signal to form an emphasized audio signal.

3. Apparatus as claimed in Claim 1 or 2, wherein said means for producing a variable control voltage comprises means for rectifying said audio signal and selectively de-emphasizing signals having a duration shorter than a predetermined value.

4. Apparatus as claimed in Claim 3, wherein said means for selectively de-emphasizing said signal having a duration shorter than a predetermined value is asymmetric in time with respect to its response to the attack and decay of said signals.

5. Apparatus as claimed in any preceding claim, wherein said means for generating a bias signal comprises means for stabilizing the amplitude of said bias signal.

6. Apparatus as claimed in Claim 5, wherein said means for stabilizing the amplitude of said bias signal includes a closed loop feedback scheme.

7. Apparatus as claimed in Claim 6, wherein said audio signal is excluded from said closed loop feedback scheme.

8. A method for improving the fidelity of audio recording on a magnetic medium wherein a bias signal is added to an audio signal being recorded comprising:

generating a bias signal having an initial reference level;

producing a variable control voltage having frequency components which are limited to be above a predetermined level; and

using said variable control voltage to continuously adjust the amplitude of said bias signal in inverse proportion to the quantity of high frequency components in said audio signal.

9. A method as claimed in Claim 8, further comprising, in said step of producing a variable control voltage, the steps of:

filtering said audio signal to thereby produce a pre-emphasized audio signal;

sampling said audio signal at the output of said means for filtering;

rectifying said filtered audio signal to produce a fluctuating DC signal directly proportional to the peak values of said audio signal; and

filtering said DC signal to remove components having durations below a predetermined level.

10. A method as claimed in Claim 9, wherein said step of filtering said DC signal further comprises the step of preventing short duration, high level changes in said audio signal from influencing the changes in the amplitude of said bias signal.

11. A method as claimed in Claim 10, further comprising separately accomplishing the timing of attack and decay of said component of said audio signal.

HALF WAVE RECTIFIER

LOW PASS FILTER

MODULATOR

OSCILLATOR

BIAS SET

ASYMMETRIC CHARGE PUMP

HIGH SPEED RECTIFIER

BIAS TRAP

AUDIO AMP.

HIGH PASS FILTER

RECORDING OUTPUT AMP.

RECORD HEAD

TAPE EQUALIZATION FILTER

AUDIO INPUT

F I G. I

HIGH PASS FILTER

AUDIO AMPLIFIER

HIGH SPEED RECTIFIER

ASYMMETRIC CHARGE PUMP

BIAS TRAP

OSCILLATOR CIRCUIT

FREQUENCY DIVIDER

F I G. 2

TO FIG. 2A

EP 0 312 404 A2

FIG. 2A